# NEW EUROPEAN PATENT SPECIFICATION

(11) **EP 0 181 955 B2**
(45) Date of publication and mention of the opposition decision: **24.05.1995**
(45) Mention of the grant of the patent: 30.01.1991
(21) Application number: 84114009.8
(22) Date of filing: 20.11.1984
(51) Int. Cl.: H02G 5/06

(54) **Electric connector**
Elektrischer Verbinder
Connecteur électrique

(30) Priority: 24.11.1983 JP 180040/83 U
(43) Date of publication of application: 28.05.1986
(73) Proprietor: MITSUBISHI DENKI KABUSHIKI KAISHA, Tokyo 100 (JP)
(72) Inventor: Kudo, Atsushi, City of Kobe Hyogo Prefecture (JP)
(74) Representative: EGLI-EUROPEAN PATENT ATTORNEYS

(56) References cited:
- DE-A- 2 002 743
- DE-U- 7 926 743
- FR-A- 2 352 421
- US-A- 3 558 798
- US-A- 4 101 730

## Description

This invention relates to an electric connector for connecting a pair of fluid insulated electrical devices having an outer casing and a conductor, disposed therein, comprising a hollow tube having open ends; a pair of electrically insulating spacers for closing said open ends of said tube so as to form a fluid-tight seal, said tube and said insulating spacers defining an insulating chamber therein, and said open ends of said tube which are sealed by said insulating spacers being connectable to the outer casing of the electrical devices to be connected; and an internal conductor assembly.

A device as described above is already known from DE-OS-2 002 743. More specifically a high voltage switchgear is described in that document with an insulating gas or fluid for a power switch which is arranged within a grounded metal casing. Its connecting conduits are passed through the metal casing into an adjacent couplings casing.

A telescopic fixable coupling means connects the power switch with the other working means.

A similar connector is also disclosed in FR-A-2 352 421. The connector there is formed in the shape of a tulip with several elastic fingers which are engaged with a conductor in their connecting position.

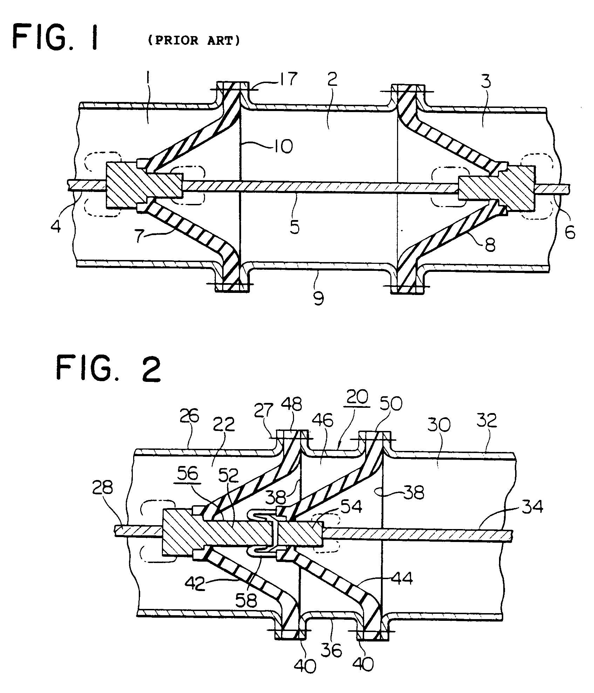

A conventional connector, both ends of which must be secured by bolting, for example is further shown in figure 1 and described herein.

This security connection, however, has the disadvantage, that the working comes to be inefficient. Especially in an electric power device, of or greater than 60 KV class insulating papers to strengthen the insulation must be wound around this conductor. Therefore the conventional connector has the disadvantages that it takes more man-days to manufacture and that the connector becomes long.

Accordingly, an object of the present invention is to provide an electrical connector which is easy to use.

Another object of the present invention is to provide an electric connector that is simple and compact in structure.

With the above objects in view, the present invention resides in an electric connector according to the first part of claim 1 whereby said internal conductor assembly comprises first and second portions rigidly mounted in the central bores of said insulating spacers to extend through said insulating chamber and connectable outside the insulating chamber at the opposite ends to the conductors of the electrical devices to be connected, said first and second portions are electrically connected to each other by slip-on contact.

The invention will become more readily apparent from the following description of the preferred embodiments taken in conjunction with the accompanying drawings, in which:
Fig. 1 is a sectional view of a conventional electric connector;
Fig. 2 is a sectional view of an embodiment of the electric connector of the present invention; and
Fig. 3 is a sectional view of another embodiment of the electrical connector of the present invention.

Fig. 1 illustrates a conventional connector. Between a transformer 1 in which insulating oil is sealed and a switchgear 3 in which SG₈ gas is filled, there is installed an insulating chamber 2 in which insulating oil is sealed. An internal conductor 5 connects a conductor 4 connected to the transformer winding with a conductor 6 connected to the switchgear. Insulating spacers 7 and 8 are provided on the transformer side and the switch gear side, respectively. Numeral 9 denotes a hollow tube having an open end 10 which forms the insulating chamber 2. However, in the conventional connector having the above configuration, both ends of the conductor 5, must be secured by bolting, for example.

In Fig. 2, an electric connector 20 of the present invention is illustrated as being connected between a pair of fluid insulated electrical device as 22 and 30. The electrical device 22 in this embodiment is an electrical transformer having an outer casing 26 and an inner conductor 28. The electrical device 30 may be a switchgear having an outer casing 32 and an inner conductor 34. The electrical connector 20 of the present invention comprises a hollow cylindrical tube 36 having open ends 38 provided with a flange 40 at opposite ends of the tube 36. The open ends 38 of the hollow tube 36 are sealed by first and second electrically insulating spacers 42 and 44 so that an insulating chamber 46 is defined by the hollow tube 36. It is seen that the spacers 42 and 44 are conically shaped and that while their peripheral flanges 48 and 50 are connectable to the outer casings 26 and 32 of the electrical devices 22 and 30, their central bores have rigidly mounted therein first and second conductor portions 52 and 54, respectively. These conductor portions 52 and 54 together constitute an internal conductor assembly 56 of the connector 20 which is supported by the pair of insulating spacers 42 and 44 and which extends through the insulating chamber 46. The first and the second conductor portions 52 and 54 are detachably connected to each other by means of a plurality of contact fingers 58 mechanically and electrically connected to the second conductor portion 54. The contact fingers 58 electrically contact the peripheral surface of the contact plug 52 under the spring action of the contact fingers 58. The conductor portions 52 and 54 are rigidly secured in the central bores of the insulating spacers 42 and 44 and the outer ends of the conductor portions 52 and 54 project from the opposite ends of the insulating chamber 46. The insulating chamber 46 is filled with an electrically insulating fluid such as an insulating oil or SF₆ gas.

When in use, the electric connector 20 is inserted between the ends of the inner conductors 28 and 34 so that the ends of the internal conductor assembly 56 of the connector 20 can be electrically and mechanically connected to the inner conductors 28 and 34 by a suitable means such as bolts. The flange portions 48 and 50 of the insulating spacers 42 and 44 may be attached to the open end of the outer casing 26 and 32 of the electrical devices 22 and 30 by any suitable means such as bolts and nuts. After it is filled with a suitable electrically insulating fluid, the open ends of the outer casings 26 an 32 are sealed so as to form a fluid-tight seal. Field installation is completed by filling the insulating chamber 46 of the electrical connector 20 with the insulating fluid.

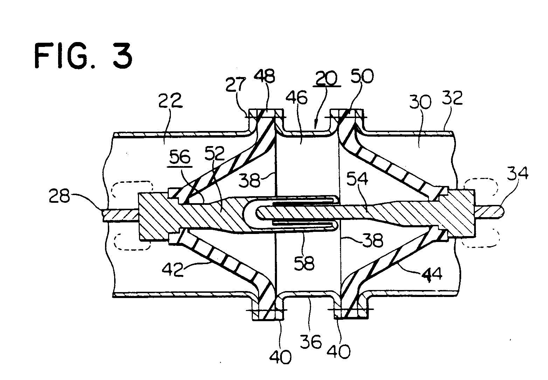

Fig. 3 illustrates another embodiment of this invsntion in which the insulating spacers are symmetrically disposed facing away from one another. In other respects, the structure is substantially the same as that shown in Fig. 1.

With this configuration, a transformer 22 and the switchgear 30 can be transported separately and easily connected in the field by use of the slip-on type internal conductor assembly 56. Field installation is completed after the hollow tube 36 is fastened by the bolt 27 and insulating oil is poured into the insulating chamber 46. Since the transformer 22 and the switchgear 30 can be transported in a closed state, an improvement in quality may be expected. Also, the substance for filling the transformer device 22 and the insulating chamber 46 may be an inactive gas such as SF₆, and the liquid which fills the switchgear 30 may be insulating oil.

Albeit the above embodiment describes the connection between a transformer and a switch-gear, connection can be made between a transformer and an electric power cable, between one transformer and another, between a switchgear and an electric power cable, between one switch-gear and another, and between one electric power cable and another with the same effect as provided in the above embodiment.

As described in this invention, by making the connecting configuration between electrical devices of the slip-on type internal conductor assembly, instead of by using bolts, it is possible to obtain an improved electric connector, in particular a small sized and low cost electric connector which can be installed and disassembled much more easily than a conventional connector employing bolts.

## Claims

1. An electric connector (20) for connecting a pair of fluid insulated electrical devices (22, 30) having an outer casing (26, 32) and a conductor (28, 34) disposed therein, comprising:
a hollow one piece tube (36) having open ends (38);
a pair of electrically insulating spacers (42, 44) for closing said open ends (38) of said tube (36) so as to form a fluid-tight seal, said tube (36) and said insulating spacers (42, 44) defining an insulating chamber (46) therein, and said open ends (38) of said tube (36) which are sealed by said insulating spacers (42, 44) being connectable to the outer casing (26, 32) of the electrical devices (22, 32) to be conntected; and an internal conductor assembly (56),
whereby
said internal conductor assembly (56) consists of first and second one piece portions (52, 54), rigidly mounted in the central bores of said insulating spacers (42, 44) to extend through said insulating chamber (46) and connectable outside the insulating chamber (46) at the opposite ends to the conductors (28, 34) of the electrical devices (22, 30) to be connected, and
said first and second one piece portions (52, 54) are electrically connected to each other by a slip-on contact (58), which is mechanically and electrically connected to either the first (52) or the second one piece portion (54).

2. Connector according to claim 1, characterized in that the slip-on contact is a fixed spring contact (56).

3. An electric connector (20) as claimed in claims 1 or 2, characterized in that an electrically insulating fluid is disposed within said insulating chamber (46).

4. An electric connector (20) as claimed in claim 3, wherein said insulating fluid comprises an inactive gas.

5. An electric connector (20) as claimed in claim 3, wherein said insulating fluid comprises an insulating oil.

6. An electric connector (20) as claimed in one of the preceding claims, wherein said insulating spacers (42, 44) are symmetrically disposed with respect to a plane perpendicular to the longitudinal axis of said internal conductor assembly.

## Patentansprüche

1. Elektrischer Verbinder (20) zur Verbindung eines Paares Fluid-isolierter elektrischer Einrichtungen (22, 30) mit einem äußeren Gehäuse (26, 32) und einem darin angeordneten Leiter (28, 34), mit einem offene Enden (38) aufweisenden hohlen einstükkigen Rohr (36);
einem Paar elektrisch isolierender Abstandshalter (42, 44) zum Verschließen der offenen Enden (38) des Rohres (36), um eine Fluid-feste Dichtung herzustellen, wobei das Rohr (36) und die isolierenden Abstandshalter (42, 44) darin eine isolierende Kammer (46) begrenzen, und wobei die durch die isolierenden Abstandshalter (42, 44) abgedichteten offenen Enden (38) des Rohres (36) mit dem äußeren Gehäuse (26, 32) der anzuschließenden elektrischen Einrichtungen (22, 32) verbindbar sind, und
einer inneren Leitungsanordnung (56), wobei die innere Leitungsanordnung (56) aus ersten und zweiten einstückigen Abschnitten (52, 54) besteht, die fest in den zentralen Bohrungen der isolierenden Abstandshalter (42, 44), sich durch die isolierende Kammer (46) erstreckend, montiert sind, und an den entgegengesetzten Enden außerhalb der isolierenden Kammer (46) mit den anzuschließenden Leitern (28, 34) der elektrischen Einrichtungen (22, 30) verbindbar sind, und die ersten und zweiten einstückigen Abschnitte (52, 54) elektrisch mittels Aufsteckkontaktes (58), der mechanisch und elektrisch verbunden ist entweder mit dem ersten (52) oder dem zweiten einstückigen Abschnitt (54), miteinander verbunden sind.

2. Verbinder nach Anspruch 1, dadurch gekennzeichnet, daß der Aufsteckkontakt ein fester Federkontakt (56) ist.

3. Elektrischer Verbinder (20) nach Anspruch 1 oder 2, dadurch gekennzeichnet, daß ein elektrisch isolierendes Fluid innerhalb der isolierenden Kammer (46) angeordnet ist.

4. Elektrischer Verbinder (20) nach Anspruch 3, dadurch gekennzeichnet, daß das isolierende Fluid ein neutrales Gas umfaßt.

5. Elektrischer Verbinder (20) nach Anspruch 3, dadurch gekennzeichnet, daß das isolierende Fluid ein isolierendes Öl umfaßt.

6. Elektrischer Verbinder (20) nach einem der vorstehenden Ansprüche, dadurch gekennzeichnet, daß die isolierenden Abstandshalter 42, 44 bezüglich einer zur Längsachse der inneren Leiteranordnung senkrecht stehenden Ebene symmetrisch angeordnet sind.

## Revendications

1. Connecteur électrique (20) pour relier deux dispositifs électriques isolés au fluide (22, 30) ayant un boîtier externe (26, 32) et un conducteur (28, 34) disposé dans celui-ci, comprenant :
un tube creux en une pièce (36) ayant des extrémités ouvertes (38) ;
deux pièces intercalaires électriquement isolantes (42, 44) pour fermer les extrémités ouvertes (38) dudit tube (36) afin de former un joint étanche au fluide, ledit tube (36) et lesdites pièces intercalaires isolantes (42, 44) définissant une chambre isolante (46) dans celui-ci, et les extrémités ouvertes (38) dudit tube (36) qui sont rendues étanches par les pièces intercalaires isolantes (42, 44) pouvant être connectées au boîtier externe (26, 32) des dispositifs électriques (22, 32) à relier; et
un ensemble conducteur interne (56),
dans lequel ledit ensemble conducteur interne (56) est constitué des première et seconde parties en une pièce (52, 54) montées rigidement dans les perçages centraux desdites pièces intercalaires isolantes (42, 44) pour s'étendre à travers la chambre isolante (46) et connectables à l'extérieur de la chambre isolante (46) aux extrémités opposées aux conducteurs (28, 34) des dispositifs électriques (22, 30) à relier, et
lesdites première et seconde parties en une pièce (52, 54) sont reliées électriquement l'une à l'autre par un contact coulissant (58) qui est relié mécaniquement et électriquement soit à la première (52) soit à la deuxième (54) partie en une pièce.

2. Connecteur selon la revendication 1, caractérisé en ce que le contact coulissant est un contact élastique fixe (56).

3. Connecteur électrique (20) selon la revendication 1 ou 2, caractérisé en ce qu'un fluide isolant électriquement est disposé dans la chambre isolante précitée (46).

4. Connecteur (20) selon la revendication 3, où le fluide isolant précité comprend un gaz inerte.

5. Connecteur électrique (20) selon la revendication 3, où le fluide isolant précité comprend une huile isolante.

6. Connecteur électrique (20) selon l'une des revendications précédentes, où les pièces intercalaires isolantes précitées (42, 44) sont disposées symétriquement par rapport à un plan perpendiculaire à l'axe longitudinal de l'ensemble de conducteurs internes précité.
